# EUROPÄISCHE PATENTANMELDUNG

(11) **EP 2 006 576 A1**
(43) Veröffentlichungstag der Anmeldung: **24.12.2008**
(21) Anmeldenummer: 08158529.1
(22) Anmeldetag: 19.06.2008
(51) Int. Cl.: F16H 3/08, F16H 3/00

(54) **Getriebeeinheit für ein Motorfahrzeug**

(30) Priorität: 22.06.2007 AT 9802007
(71) Anmelder: Jegel, Franz Peter, Ing., 4400 Steyr (AT)
(72) Erfinder: Jegel, Franz Peter, Ing., 4400 Steyr (AT)
(74) Vertreter: Babeluk, Michael

(57) **Zusammenfassung**

Die Erfindung betrifft eine Getriebeeinheit (10) für ein Motorfahrzeug mit einem Doppelkupplungsgetriebe (11) mit einer von einer Brennkraftmaschine angetriebenen Antriebswelle (13), welche wahlweise über eine erste Schaltkupplung (16) auf eine erste Eingangswelle (18) oder über eine zweite Schaltkupplung (17) auf eine zweite Eingangswelle (19) einwirkt, wobei mit der ersten Eingangswelle (18) eine erste Gruppe (14) von ersten Zahnrädern (1a, 3a, 5a, 7a) und mit der zweiten Eingangswelle (19) eine zweite Gruppe (15) von ersten Zahnrädern (2a, 4a, 6a, Ra) verbunden ist, wobei jeder Gruppe (14, 15) von ersten Zahnrädern (1a, 2a, 3a, 4a, 5a, 6a, Ra) jeweils eine Gruppe (20, 21) von auf zumindest einer Vorgelegewelle (22, 23) angeordneten zweiten Zahnrädern (1b, 2b, 3b, 4b, 5b, 6b, Rb) zugeordnet ist, welche Vorgelegewelle (22, 23) mit einem Differentialgetriebe (12) verbunden ist. Um Gewicht und Baugröße einzusparen, ist vorgesehen, dass die erste Gruppe (20) von zweiten Zahnrädern (1b, 3b, 5b, 7b) auf einer ersten Vorgelegewelle (22) und die zweite Gruppe (21) von zweiten Zahnrädern (2b, 4b, 6b, Rb) auf einer zweiten Vorgelegewelle (23) angeordnet ist, wobei die Vorgelegewellen (22, 23) räumlich getrennt ausgebildet sind.

## Beschreibung

Die Erfindung betrifft eine Getriebeeinheit für ein Motorfahrzeug mit einem Doppelkupplungsgetriebe mit einer von einer Brennkraftmaschine angetriebenen Antriebswelle, welche wahlweise über eine erste Schaltkupplung auf eine erste Eingangswelle oder über eine zweite Schaltkupplung auf eine zweite Eingangswelle einwirkt, wobei mit der ersten Eingangswelle eine erste Gruppe von ersten Zahnrädern und mit der zweiten Eingangswelle eine zweite Gruppe von ersten Zahnrädern verbunden ist, wobei jeder Gruppe von ersten Zahnrädern jeweils eine Gruppe von auf zumindest einer Vorgelegewelle angeordneten zweiten Zahnrädern zugeordnet ist, welche Vorgelegewelle mit einem Differentialgetriebe verbunden ist.

Doppelkupplungsgetriebe mit zwei Eingangswellen, auf denen jeweils eine Gruppe von ersten Zahnrädern angeordnet ist, welche auf jeweils eine Gruppe von zweiten Zahnrädern einwirken, wobei die zweiten Zahnräder auf einer Vorgelegewelle angeordnet sind, die mit einem Differentialgetriebe drehverbunden ist, sind aus den Druckschriften DE 40 05 383 A1 und WO 2005/085674 A1 bekannt.

Des weiteren sind ähnliche Doppelkupplungsgetriebe aus den Veröffentlichungen DE 198 07 374 A1, US 5,385,064 A oder WO 92/04558 A1 bekannt.

Die bekannten Doppelkupplungsgetriebe weisen jeweils zwei Gruppen von zweiten Zahnrädern auf, welche auf einer einzigen Vorgelegewelle angeordnet sind. Die für beide Zahnradgruppen durchgehende Vorgelegewelle hat allerdings den Nachteil, dass die Größe der verwendeten Kupplungen sich direkt auf den Achsabstand zwischen den Eingangswellen und der Vorgelegewelle und somit auf die Größe des Getriebegehäuses und das Gewicht des Getriebes auswirkt.

Aufgabe der Erfindung ist es, bei einem Doppelkupplungsgetriebe der eingangs genannten Art Größe und Gewicht zu verringern.

Erfindungsgemäß wird dies dadurch erreicht, dass die erste Gruppe von zweiten Zahnrädern auf einer ersten Vorgelegewelle und die zweite Gruppe von zweiten Zahnrädern auf einer zweiten Vorgelegewelle angeordnet ist, wobei die Vorgelegewellen räumlich getrennt ausgebildet sind.

Jedes erste Zahnrad kann über eine vorzugsweise als Synchronisiereinrichtung ausgebildete Kupplungsvorrichtung mit der jeweiligen Vorgelegewelle verbindbar sein, wobei es besonders vorteilhaft ist, wenn zum Umschalten zwischen zwei benachbarten Zahnradpaaren jeweils eine Kupplungsvorrichtung, vorzugsweise mit Verschiebemuffen, vorgesehen ist. Dies ermöglicht es, die Anzahl der Bauteile auf ein Minimum zu reduzieren.

Die geteilte Vorgelegewelle hat den Vorteil, dass die Größe der Schaltkupplungen nicht mehr mit dem Achsabstand im ursächlichen Zusammenhang steht. Dadurch können große, leistungsstarke Schaltkupplungen mit einem Getriebe mit kurzem, auf die Leistung abgestimmten Achsabstand zwischen Eingangswellen und Vorgelegewelle kombiniert werden. Daraus resultieren Gewichts- und Kostenvorteile.

Generell können auch kleine Übersetzungen verwendet werden, da die hoch untersetzten Gänge nicht durch eine Hohlwellenkonstruktion beschränkt sind.

Die Achsabstände zwischen Eingangs- und Vorgelegewellen können gleich oder unterschiedlich sein. Auch die Lage der Vorgelegewellen kann gleichachsig oder versetzt sein. Dadurch entsteht keine Bindung zum Kupplungsdurchmesser. Zu Folge kleinerer Achsabstände können im Durchmesser verkleinerte Zahnräder eingesetzt werden, was Gewichts- und Kostenvorteile, sowie Geräuschvorteile bringt.

Die Übersetzungen zwischen den Vorgelegewellen und dem Differentialgetriebe können gleich oder unterschiedlich ausgebildet sein.

Weiters bietet die erfindungsgemäße Lösung die Möglichkeit, dass die erste und/oder die zweite Kupplung als trockenlaufende Schaltkupplung ausgebildet ist. Trockenlaufende Schaltkupplungen benötigen im Vergleich zu im Ölbad laufenden Kupplungen einen größeren Durchmesser, weisen aber einen besseren Wirkungsgrad auf.

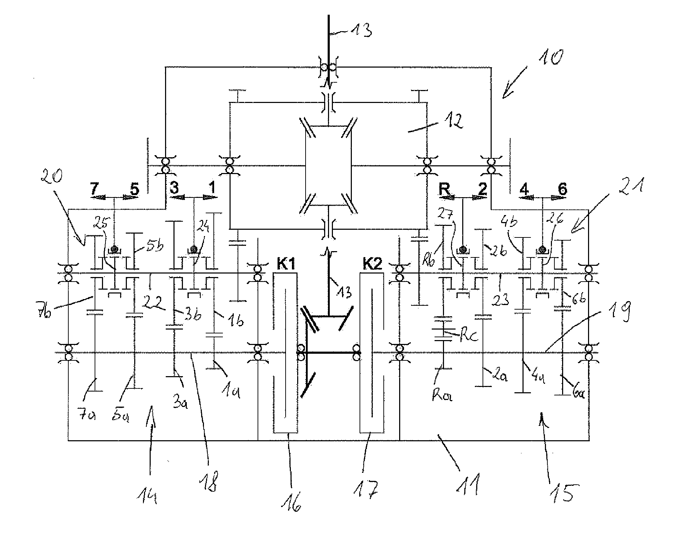

Die Erfindung wird im Folgenden anhand der Figur näher erläutert.

Die Figur zeigt eine Getriebeeinheit 10, bestehend aus einem Doppelkupplungsgetriebe 11 und einem diesem nachgeschalteten Differentialgetriebe 12. Das Doppelkupplungsgetriebe 11 weist eine Antriebswelle 13 auf, welche wahlweise mit einer ersten Gruppe 14 oder einer zweiten Gruppe 15 von ersten Zahnrädern 1a, 3a, 5a, 7a, bzw. 2a, 4a, 6a, Ra antriebsverbindbar ist. Jeder der beiden Gruppen 14, 15 ist jeweils eine trennbare Schaltkupplung 16, 17 zugeordnet. Das Doppelkupplungsgetriebe weist dabei sieben Vorwärtsgänge 1 bis 7 und einen Rückwärtsgang R auf. Die ersten Zahnräder 1a, 3a, 5a, 7a der ersten Gruppe 14 sind auf einer ersten Eingangswelle 18 und die ersten Zahnrädern 2a, 4a, 6a, Ra sind auf einer zweiten Eingangswelle 19 angeordnet.

Der ersten Gruppe 14 von ersten Zahnrädern 1a, 3a, 5a, 7a und der zweiten Gruppe 15 von ersten Zahnrädern 2a, 4a, 6a, Ra ist jeweils eine erste, bzw. zweite Gruppe 20, 21 von zweiten Zahnrädern 1b, 3b, 5b, 7b, bzw. 2b, 4b, 6b, Rb zugeordnet, wobei die zweiten Zahnräder 1b, 3b, 5b, 7b der ersten Gruppe 20 auf einer ersten Vorgelegewelle 22 und die zweiten Zahnrädern 2b, 4b, 6b, Rb auf einer zweiten Vorgelegewelle 23 drehbar gelagert sind. Sowohl die erste Vorgelegewelle 22, als auch die zweite Vorgelegewelle 23 sind mit dem Differentialgetriebe 12 antriebsverbunden.

Jedes der zweiten Zahnräder 1b, 3b, 5b, 7b; 2b, 4b, 6b steht mit jeweils einem korrespondierenden ersten Zahnrad 1a, 3a, 5a, 7a; 2a, 4a, 6a in ständigem Zahneingriff und kann über eine Synchronisiereinheit 24, 25, 26, 27 wahlweise mit der jeweiligen Vorgelegewelle 22, 23 drehverbunden werden. Für den Rückwärtsgang R ist zwischen dem ersten Zahnrad Ra und dem zweiten Zahnrad Rb ein Zwischenzahnrad Rc zur Richtungsumkehr angeordnet.

Um Teile einzusparen, ist für jeweils zwei benachbarte zweite Zahnräder 1b, 3b; 5b, 7b; 4b, 6b jeweils eine gemeinsame als Synchronisiereinrichtung ausgebildete Kupplungsvorrichtung 24, 25, 26, 27 vorgesehen, welche beispielsweise durch eine Verschiebemuffe gebildet sein kann.

Durch die getrennt ausgeführten Vorgelegewellen 22, 23 können die Achsabstände zwischen den Vorgelegewellen 22, 23 und den Eingangswelle 18, 19 unabhängig vom Durchmesser der Kupplungen 16, 17, welche auch als trockenlaufende Schaltkupplungen ausgeführt sein können, ausgelegt werden. Dadurch kann Baugröße und Gewicht für die Getriebeeinheit 10 eingespart werden.

## Patentansprüche

1. Getriebeeinheit (10) für ein Motorfahrzeug mit einem Doppelkupplungsgetriebe (11) mit einer von einer Brennkraftmaschine angetriebenen Antriebswelle (13), welche wahlweise über eine erste Schaltkupplung (16) auf eine erste Eingangswelle (18) oder über eine zweite Schaltkupplung (17) auf eine zweite Eingangswelle (19) einwirkt, wobei mit der ersten Eingangswelle (18) eine erste Gruppe (14) von ersten Zahnrädern (1a, 3a, 5a, 7a) und mit der zweiten Eingangswelle (19) eine zweite Gruppe (15) von ersten Zahnrädern (2a, 4a, 6a, Ra) verbunden ist, wobei jeder Gruppe (14, 15) von ersten Zahnrädern (1a, 2a, 3a, 4a, 5a, 6a, Ra) jeweils eine Gruppe (20, 21) von auf zumindest einer Vorgelegewelle (22, 23) angeordneten zweiten Zahnrädern (1b, 2b, 3b, 4b, 5b, 6b, Rb) zugeordnet ist, welche Vorgelegewelle (22, 23) mit einem Differentialgetriebe (12) verbunden ist, **dadurch gekennzeichnet, dass** die erste Gruppe (20) von zweiten Zahnrädern (1b, 3b, 5b, 7b) auf einer ersten Vorgelegewelle (22) und die zweite Gruppe (21) von zweiten Zahnrädern (2b, 4b, 6b, Rb) auf einer zweiten Vorgelegewelle (23) angeordnet ist, wobei die Vorgelegewellen (22, 23) räumlich getrennt ausgebildet sind.

2. Getriebeeinheit (10) nach Anspruch 1, **dadurch gekennzeichnet, dass** jedes erste Zahnrad (1a, 2a, 3a, 4a, 5a, 6a, Ra) über eine vorzugsweise als Synchronisiereinrichtung ausgebildete Kupplungsvorrichtung (24, 25, 26, 27) mit der jeweiligen Vorgelegewelle (22, 23) verbindbar ist.

3. Getriebeeinheit (10) nach Anspruch 2, **dadurch gekennzeichnet, dass** zum Umschalten zwischen benachbarten Zahnradpaaren jeweils eine Kupplungsvorrichtung (24, 25, 26, 27) vorzugsweise mit zumindest einer Verschiebemuffe, vorgesehen ist.

4. Getriebeeinheit (10) nach einem der Ansprüche 1 bis 3, **dadurch gekennzeichnet, dass** die erste und/oder die zweite Schaltkupplung (16,17) als trockenlaufende Schaltkupplung ausgebildet ist.
